# EUROPEAN PATENT SPECIFICATION

(11) **EP 0 468 567 B1**
(45) Date of publication and mention of the grant of the patent: **31.08.1994**
(21) Application number: 91201840.5
(22) Date of filing: 15.07.1991
(51) Int. Cl.: B62D 13/02

(54) **Vehicle provided with a controllable rigid axle**
Fahrzeug, versehen mit einer lenkbaren starren Achse
Véhicule pourvu d'un essieu rigide dirigeable

(30) Priority: 23.07.1990 NL 9001670
(43) Date of publication of application: 29.01.1992
(73) Proprietor: GINAF Trucks B.V., NL-3903 LA Veenendaal (NL)
(72) Inventor: van Neerbos, Teunis, NL-4051 AH Ochten (NL); Oome, Petrus Hubertus Adrianus Maria, NL-3904 ZR Veenendaal (NL); de Zaaijer, Richard Johannes Wilhelmus, NL-6671 BC Zetten (NL)
(74) Representative: Timmermans, Anthonius C.Th., Ir.

(56) References cited:
- EP-A- 0 126 387
- CH-A- 170 265
- DE-A- 3 435 394
- DE-A- 3 626 779
- DE-C- 644 423
- DE-C- 871 249
- FR-A- 1 232 964

## Description

The invention concerns a vehicle as outlined in the preamble of claim 1.

Such a vehicle is commonly known. In particular, one is reminded of vehicles which are suited for the transport of heavy loads, such as sand, scrap, rubble, asphalt, garbage, etc. A vehicle as described in the first paragraph is known from EP-A-0126387.

It is known that the forces which arise in the chassis and, in particular, those parts of the suspension of, in particular, a rigid rear axle can be particularly large when the known vehicle is loaded, especially when taking a bend. For this reason, the chassis is made from a material which is suited to withstanding these forces. The disadvantage of such constructions is that they are, to a certain extent, unnecessarily heavy.

The purpose of the invention is to provide a vehicle for the transport of, in particular, heavy loads, which vehicle has improved road-holding and stability, especially when taking a bend, and, thus, undergoes less wear, without having to resort to work-intensive or expensive measures.

To this end, the vehicle according to the invention is characterised by the features as further outlined in claim 1.

In adjusting the length of the reaction-force elements according to the chosen variation of the direction of motion, the rigid axle also turns in the desired direction of motion. In applications in, for example, buses or trucks (in particular the multiple-axle trucks intended for heavy loads), very large forces arise not only in the chassis but also in the rotation and support-points of the suspension of the known axle, particularly when taking a bend. These forces occur to a much lesser extent in the vehicle according to the invention, in which vehicle the rigid axle also moves at least to some extent with the direction of motion of the vehicle. The drivability, road-holding and stability of the vehicle according to the invention, in which vehicle the rigid axle also moves at least to some extent with the direction of motion of the vehicle. The drivability, road-holding and stability of the vehicle according to the invention are hereby improved; above all, the manoeuvrability is hereby increased, due to the fact that the mobile rigid axle also determines the required direction of motion of the vehicle.

It is also an advantage that, if desired, existing vehicles can be converted into vehicles according to the invention in a relatively small-scale operation. This is achieved by replacing the usual rigid reaction-force elements by elements whose length can be smoothly adjusted by, for example, hydraulic, pneumatic or electrical means.

In practice, it has transpired that adjustment of the rigid axle of the vehicle when taking a bend is not a necessity at all possible speeds which the vehicle can attain. This fact is exploited in one preferred embodiment of the vehicle according to the invention, which embodiment is characterised by means which deliver a speed-dependent signal which depends on the speed of locomotion of the vehicle, which signal, together with the motion-dependent signal, is fed into a processing device. The said processing device will only pass on the motion-dependent signal to the length-adjustable reaction-force elements if the speed of locomotion of the vehicle is less than a particular adjustable value.

In one preferred embodiment, the vehicle according to the invention is characterised by the fact that the said adjustable value is of the order of 30 km per hour.

In practice, this value appeared to be quite satisfactory, since trucks take the majority of bends at relatively low speed and making the rigid axle adjustable at speeds higher than this places even higher demands on the reaction-force elements and the chassis.

In a preferential embodiment, the vehicle according to the invention is characterised by the fact that driving means are connected to the rigid axle.

An advantage is that the said driving means do not have to have any particular form in order to adjust the rigid axle, since the present-day driving means in heavy vehicles already include, in general, a cross-clutch, which not only allows the rigid axle to be adjustable but also allows simultaneous adjustment of the rigid axle and contraction/extension of the rigid axle with the help of fitting springing media.

In another preferential embodiment, the vehicle according to the invention is characterised by the fact that the rigid axle is mounted in bearings at a rotation point which is almost centered on the adjustable (and possibly drivable) rigid axle, the said rotation point having bearing means which allow rotation of the rigid axle in at least two planes.

The advantage of this further embodiment of the vehicle according to the invention is that it makes possible a desired motion of the rigid axle.

In a simple embodiment, the bearing means include a ball bearing.

In yet another ensuing preferential embodiment, the vehicle according to the invention is characterised by the fact that the maximal angular displacement (A) which is to be brought about by adjustment of the rigid axle is, when measured with respect to the unadjusted position, smaller than the maximal angular displacement (B) which can be achieved with a controllable forward axle.

The advantage of this preferential embodiment of the vehicle according to the invention is that it has appeared to be unnecessary to exactly match the adjustment of the controllable forward axle (which is usually present) to the adjustment of the rigid rear axle of the vehicle. In this way, no very strict demands are made of the accuracy of the degree of correspondence between the adjustments of the respective shafts. Special constructions relating to, for example, suspension, driving, stability, etc., are thus, in principle, unnecessary.

The relation between the angular displacement of the rigid axle and the angular displacement of the forward axle (in particular, the controllable forward axle) which is to be decided by the manufacturer is preferably decided on grounds of steering geometry, whereby the necessary media (pneumatic, hydraulic or electric, for example) for maintaining the said relation take a relatively simple form.

The invention shall be further elucidated using the figures, in which similar elements are labelled by the same reference numbers. The subjects of the figures are as follows:
Figure 1 is a schematic rendition of a possible embodiment of an adjustable rigid axle with a regulator system for application in the vehicle according to the invention;
Figure 2 is a schematic plan of a vehicle according to the invention in which the principle of figure 1 is applied and in which the rigid axle is shown in three positions;
Figure 3 is a depiction of an end view of the vehicle according to figure 2; and
Figure 4 is a rear view of the depictions in figures 2 and 3.

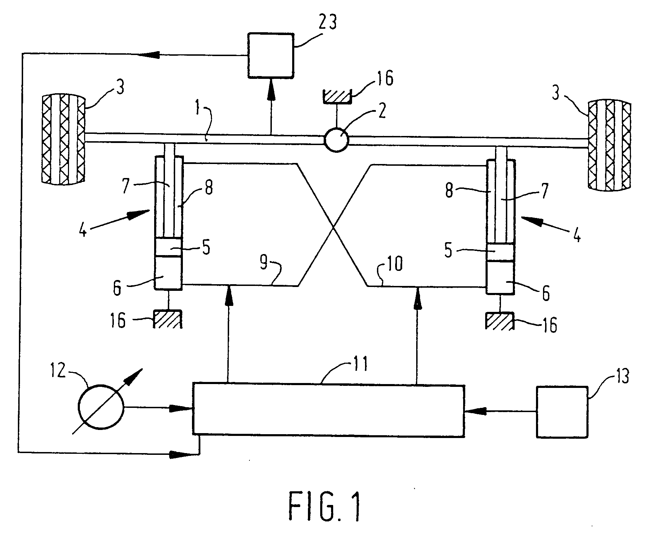

Figure 1 shows schematically how a rigid axle 1, which is mounted in bearing means 2 and which is provided with wheels/wheel units 3, is adjustable via reaction-force elements 4. Adjustment with the aid of the reaction-force elements 4 leads to motion of the rigid axle 1 about an axis which is perpendicular to the plane of figure 1. It goes without saying that the embodiment also allows a springing motion of the wheels 3 in a plane perpendicular to the drawing. The axle 1 is rigid in the sense that the positions assumed by the wheel units 3 (which can rotate about the rigid axle 1) are fixed with respect to the rigid axle 1, so that the axle 1 and wheels 3 can only be adjusted together. The reaction-force elements 4 can, for example, be embodied as elements whose length is hydraulically, pneumatically or electrically adjustable. Figure 1 shows an embodiment in which the length-adjustment of the reaction-force elements 4 occurs under the influence of a gas or liquid-displacement. If so desired, this allows a large force to be developed for adjustment of the rigid axle. The elements 4 shown herein possess a plunger 5 and a cylinder-space 6 in which the plunger 5 can be moved. The plunger 5 is connected to the rigid shaft via a plunger rod 7. This connection, which is only schematically depicted, shall in general be somewhat hinge-like, so as to ensure that no overly large unwanted forces develop when the plunger 5 moves in the cylinder-space 6. Above the plunger 5 is located a space 8 where the pressure in a medium can be lowered or raised. In general, simultaneously raising/lowering the pressure in space 6 and lowering/raising the pressure in space 8 will cause the plunger to move. In the depicted embodiment, the spaces 6 and 8 are mutually interconnected by means of the pipes 9 and 10. The pipes 9 and 10 are connected to a processing device 11 which arranges fitting displacements of the medium in pipes 9 and 10 so as to displace the plungers 5. The processing device 11 is connected to means 12 which produce a signal which is a measure of the chosen change in the direction of motion of the vehicle. The means 12 constitute an appliance, such as a steering wheel, joystick, etc., which determines the desired direction of motion of the vehicle and passes this on to the processing device 11. In what is to follow, this appliance will be referred to as the Control Command Unit (CCU). This signal can either be derived directly from the position adopted by the CCU, or it can be derived by indirect means from the position of the controlable forward shaft of the vehicle. The processing device 11 shall be suitably equipped by the expert with whatever means he judges to be necessary to enable it to convert the recieved electrical signal (dependent on the direction of motion) into suitable pneumatic or hydraulic signals in the pipes 9 and 10. Media 23 are connected to the axle 1 and to the processing device 11, which media include an angle recorder (which, for example, is embodied as a steering wheel) which is used to translate the momentary position of the axle 1 into an electrical signal to be used by the processing device 11.

Figure 1 shows means 13 which are connected to the processing device 11 and which provide the device 11 with a signal which is dependent on the speed of the vehicle. In general, the media 11 contain a microprocessor (which is not further depicted) which functions as a regulating circuit for the elements 4 and to which the signals from the respective means 12, 13 and 23 are passed. The signal provided by the media 12 contains the desired value concerning the desired direction of motion of the vehicle, whereas the signal provided by the means 23 represents the actual adjusted and measured value determined by the state of the axle 1. Taking the form of a regulator circuit, the processing device 11 is equipped to send a signal to the reaction-force elements 4, which signal shall only be a measure of the desired length-adjustment of the reaction-force elements 4 if the speed of locomotion of the vehicle is less than a certain (generally electrically) adjustable value. In practice, a programmable value which corresponds to 30 km per hour appeared to be favourable. In this way, the manoeuvrability of the vehicle's chassis is improved to an extent which is sufficient in practice, and at least the very greatest wear is reduced.

If so desired, the reaction-force elements can also be electrically or electromechanically embodied, whereby motion of the rods 7 is effected, for example, with the aid of a motor-driven worm-wheel. Another alternative is the choice of an electromechanical converter to adjust the rigid axle 1.

The working of the embodiment shown in figure 1 is such that, on the basis of the desired direction-of-motion dependent signal from the means 12, and the measured value supplied by the media 23, the position of the rigid axle 1 is continually influenced if the speed of the vehicle lies under a certain minimum value.

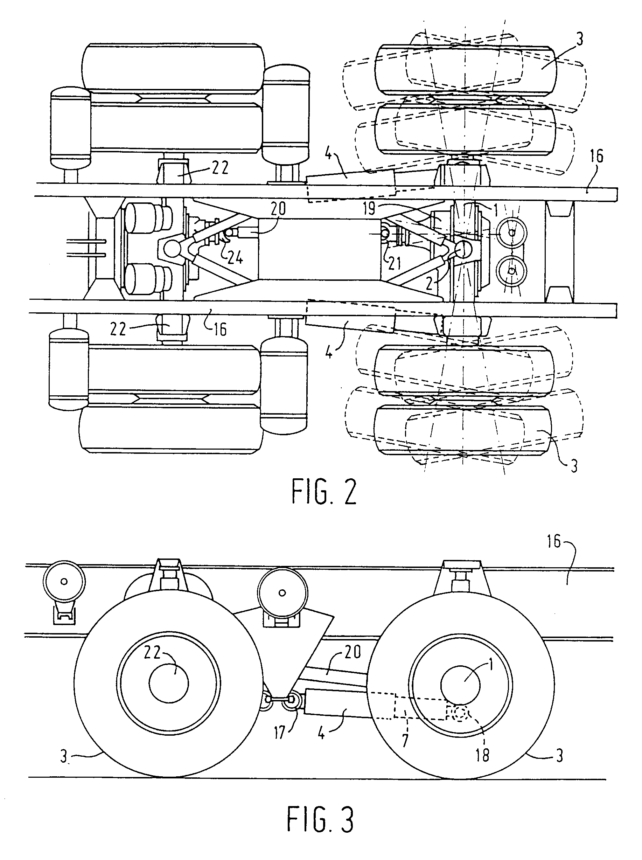

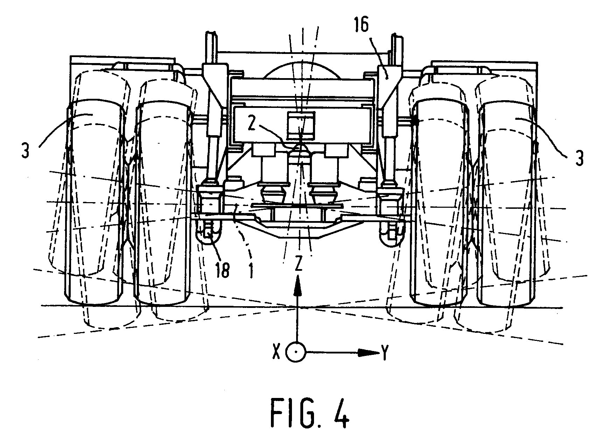

Figures 2, 3 and 4 show a top view, side view and rear view, respectively, of the manner in which one of the principles discussed up to now is implemented in a vehicle. The figures depict a chassis 16 from which the rigid axle 1 is in (generally sprung) suspension. At its approximate middle point, the rigid axle 1 is mounted in the bearing means 2, which bearings are embodied, for example, as ball bearings. The said bearing means can permit both the springing motion of the axle 1 and the motion associated with adjustment of the axle 1. Figure 3 shows that both the extremity 17 of the element 4 and the other extremity 18 of the element 4 are connected in a hinge-like manner to the chassis 16 and the axle 1, respectively. Despite the fact that the rigid axle 1 is adjustable, it is made drivable by means of a differential 19 mounted between the wheels 3, the said differential being provided with a driving shaft 20. A cross-clutch 21 is mounted between the differential 19 and the driving shaft 20, thus allowing simultaneous driving, springing and adjustment of the rigid axle 1. As shown to best advantage in figure 2, the drivable rigid axle 1 can form the rearmost axle of a possible combination of mutually parallel rigid axles connected to the chassis 16. An axle 22 is also depicted. Driving means 19, 20, 21, and a cross-clutch 24 are mutually interconnected in series and are also connected to the axle 22.

In general, the vehicle possesses a controllable forward axle. If the maximal angular displacement of the rigid axle 1 is denoted by A and the maximal angular displacement of the controllable forward axle (assuming such to be present) is denoted by B, then, in most cases, it will be preferable to have A smaller than B. In this case, the forces which arise when the vehicle takes a bend will be significantly limited in magnitude, thus reducing what has to be endured by, in particular, the chassis 16. In general, a desired programmable relation (of steering-geometric nature, for example) will exist between the adjusted angular displacement of the shaft 1 and the desired angular displacement which is stipulated by the CCU 11.

Variations of the preceding embodiments occurring naturally to the expert are taken to be covered by the protection rights pertaining to the following claims.

## Claims

1. Vehicle provided with a chassis (16) with suspended axles (1), at least one of which is a suspended rigid axle (1), the said suspension including at least one force element (4), at one hand connected to the chassis (16) whose length can be momentarily adjusted according to a motion-dependent signal which is a measure of the desired change in the direction of motion of the vehicle, said vehicle being characterised in that the force element is a reaction force element (4) which is at the other hand directly connected to the suspended rigid axle (1), and that the length of the reaction-force elements (4) can be momentarily adjusted so as to steer the suspended rigid axle (1) according to a motion-dependent signal.

2. Vehicle according to claim 1, characterised by the fact that the vehicle is provided with means (13) which furnish a speed-dependent signal which depends upon the speed of locomotion of the vehicle, whereby said speed-dependent signal, together with the motion-dependent signal, are fed into a processing device (11), which processing device (11) will only allow the length-adjustable reaction-force elements (4) to access the motion-dependent signal if the speed of locomotion of the vehicle is less than a certain adjustable value.

3. Vehicle according to claim 2, characterised by the fact that the adjustable value is of the order of 30 km per hour.

4. Vehicle according to one of the claims 1 to 3, inclusive, characterised by the fact that the vehicle has driving means coupled to the rigid axle (1).

5. Vehicle according to one of the claims 1 to 4, inclusive, characterised by the fact that the rigid axle (1) is mounted in bearing means (2) at a rotation point which is almost centered on the adjustable, and possibly drivable, rigid axle (1), the said rotation point containing bearing means (2) which allow motion of the rigid axle (1) in at least two planes.

6. Vehicle according to claim 5, characterised by the fact that the bearing means (2) contain ball bearings.

7. Vehicle according to one of the claims 1 to 6, inclusive, characterised by the fact that the reaction-force elements (4) are attached to almost diametrically opposite extremities of the rigid axle (1).

8. Vehicle according to one of the preceding claims in which claim 2 is referenced, characterised by the fact that the means (13) include electronic means for the purpose of producing an electric speed-dependent signal, that there is provided further electronic means (12) for the provision of an electric signal which contains information about the desired direction of motion of the vehicle, that the processing device (11) contains a calculating device, whereby into the said calculating device are fed at least the speed-dependent electric signal and the motion-dependent electric signal, and the calculating device delivers a signal which, in the event of the speed-dependent signal's indicating that the vehicle's speed lies under a certain limit, contains information about the desired direction of motion of the vehicle, that the reaction-force elements (4) are connected to the said calculating device and are embodied in such a way that, on the basis of the information contained in the electric signal provided by the calculating device, a change in length occurs in the reaction-force elements (4) which corresponds to the desired change in the direction of motion of the vehicle.

9. Vehicle according to claim 8, characterised by the fact that the reaction-force elements (4) are embodied as means whose length can be adjusted electrically, pneumatically, mechanically or hydraulically.

10. Vehicle according to claim 8 or 9, characterised by means (23) which take the form of an angle recorder and which are connected to the rigid axle (1) and the processing device, their function being the provision of a signal which is a measure of the adjusted position of the rigid axle (1).

11. Vehicle according to one of the claims 1 to 10, inclusive, characterised by the fact that the maximal angular displacement (A) which can be achieved by adjustment of the rigid axle (1) when measured with respect to the non-adjusted position is smaller than the maximal angular displacement (B) which can be achieved with a controllable forward axle.

12. Vehicle according to claim 11, characterised by the fact that there is a programmable relation between (A) and (B).

13. Vehicle according to one of the preceding claims, characterised by the fact that the vehicle has multiple rigid axles (1) which are drivable via series-connected respective driving means (19, 20,21), whereby at least one of the rigid axles (1) of the vehicle contains reaction-force elements (4) for adjustment of at least that one rigid axle (1) or axles, if there are indeed more than one.

14. Vehicle according to claim 13, characterised by the fact that the vehicle possesses a controllable forward axle, and also possesses a rigid rear axle (1) which is connected to the controllable forward axle.

## Patentansprüche

1. Fahrzeug versehen mit einem Fahrgestell (16) mit aufgehängten Achsen (1), wovon mindestens eine Achse eine aufgehängte starre Achse (1) ist, wobei genannte Aufhängung mindestens ein Kraft-element (4) umfasst, das an einer Seite mit dem Fahrgestell (16) verbunden ist, und dessen Länge in jedem Moment geregelt werden kann in Übereinstimmung mit einem bewegungsabhängigen Signal, das massgebend ist für die erwünschte Änderung in der Bewegungsrichtung des Fahrzeuges und wobei genanntes Fahrzeug dadurch gekennzeichnet wird,
dass das Kraft-element ein Reaktionskraft-element (4) ist, das an der anderen Seite direkt mit einer aufgehängten starren Achse (1) verbunden ist, und dass die Länge der Reaktionskraft-elemente (4) in jedem Moment geregelt werden kann um so die aufgehängte starre Achse (1) in Übereinstimmung mit einem bewegungsabhängigen Signal zu steuern.

2. Fahrzeug nach Anspruch 1, dadurch gekennzeichnet,
dass das Fahrzeug ausgestattet ist mit Einrichtungen (13), die ein geschwindigkeitsabhängiges Signal abliefern, das abhängt von der Fortbewegungsgeschindigkeit des Fahrzeuges, wobei genanntes geschwindigkeitsabhängiges Signal, zusammen mit dem Bewegungsabhängigen Signal an einer Verarbeitungseinrichtung (11) zugeführt wird, und wobei diese Verarbeitungseinrichtung (11) den in der Länge regelbaren Reaktionskraft-elementen (4) nur dann Zugang zum bewegungsabhängigen Signal ermöglicht wenn die Fortbewegungsgeschwindigkeit geringer ist als ein bestimmter einstellbarer Wert angibt.

3. Fahrzeug nach Anspruch 2, dadurch gekennzeichnet,
dass der einstellbare Wert in der Höhe von ungefähr 30 Km pro Stunde liegt.

4. Fahrzeug nach einem der Ansprüche 1 bis 3 einschliesslich, dadurch gekennzeichnet,
dass beim Fahrzeug an die starre Achse (1) eine Antriebeinrichtung gekuppelt wird.

5. Fahrzeug nach einem der Ansprüche 1 bis 4 einschliesslich, dadurch gekennzeichnet,
dass die starre Achse (1) in einer Lager-einrichtung (2) montiert ist in einem Drehpunkt, das fast im Zentrum der regelbaren, und möglicherweise anzutreibenden, starren Achse (1) liegt, wobei genannter Drehpunkt eine Lager-einrichtung (2) umfasst die eine Bewegung der starren Achse (1) in mindestens zwei Flächen ermöglicht.

6. Fahrzeug nach Anspruch 5, dadurch gekennzeichnet,
dass die Lager-einrichtung Kugellager (2) umfasst.

7. Fahrzeug nach einem der Ansprüche 1 bis 6 einschliesslich, dadurch gekennzeichnet,
dass die Reaktionskraft-elemente (4) an fast diametral gegenüber einander liegenden Enden der starren Achsen (1) befestigt sind.

8. Fahrzeug nach einem der vorhergehenden Ansprüche wobei auf Anspruch 2 hingewiesen wird, dadurch gekennzeichnet,
dass die Einrichtung (13) eine elektronische Einrichtung umfasst mit dem Zweck ein elektrisches geschwindigkeitsabhängiges Signal zu produzieren, dass eine weitere elektronische Einrichtung (12) angebracht ist um ein elektrisches Signal zu beschaffen, das Information enthält über die erwünschte Bewegungsrichtung des Fahrzeuges, dass die Verarbeitungseinrichtung (11) eine Rechenvorrichtung enthält, wobei der genannten Rechenvorrichtung mindestens das geschwindigkeitsabhängige elektrische Signal und das bewegungsabhängige Signal zugeführt wird und dass die Rechenvorrichtung ein Signal abgibt das, im Fall dass das geschwindigkeitsabhängige Signal angibt dass die Geschwindigkeit des Fahrzeuges unter einem bestimmten Wert liegt, Information enthält über der erwünschten Bewegungsrichtung des Fahrzeuges, dass die Reaktionskraft-elemente (4) verbunden sind mit genannter Rechenvorrichtung und so gestaltet sind dass, aufgrund der Information enthalten in dem elektrischen Signal das geliefert wird durch die Rechenvorrichtung, eine Änderung der Länge der Reaktionskraft-elemente (4) auftritt, die übereinstimmt mit der erwünschten Änderung in der Bewegungsrichtung des Kraftfahrzeuges.

9. Fahrzeug nach Anspruch 8, dadurch gekennzeichnet,
dass die Reaktionskraft-elemente (4) ausgeführt sind als Einrichtungen deren Länge elektrisch, pneumatisch, mechanisch oder hydraulisch geregelt werden kann.

10. Fahrzeug nach Anspruch 8 oder 9, dadurch gekennzeichnet, dass Einrichtungen (23) angebracht sind, die gestaltet sind als ein Winkel-registriergerät und die verbunden sind mit der starren Achse (1) und mit der Verarbeitungseinrichtung, und deren Funktion besteht aus der Beschaffung eines Signales das ein Masz ist für die eingestellte Position der starren Achse (1).

11. Fahrzeug nach einem der Ansprüche 1 bis 10 einschliesslich, dadurch gekennzeichnet,
dass die maximale Winkelverschiebung (A) die erreicht werden kann durch Justierung der starren Achse (1), wenn diese gemessen wird mit Rücksicht auf der nicht-geregelten Position, kleiner ist als die maximale Winkelverschiebung (B) die erreicht werden kann mit einer regelbaren Vorderachse.

12. Fahrzeug nach Anspruch 11, dadurch gekennzeichnet,
dass ein programmierbares Verband besteht zwischen (A) und (B).

13. Fahrzeug nach einem der vorhergehenden Ansprüche, dadurch gekennzeichnet, dass das Fahrzeug mehrere starre Achsen (1) hat welche anzutreiben sind durch hintereinander verbundene respektive Antriebgeräte (19, 20, 21), wobei mindestens einer der starren Achsen (1) des Fahrzeuges Reaktionskraft-elemente (4) enthält zur Justierung von mindestens jener einen starren Achse (1) oder Achsen, wenn es tatsächlich mehr als eins gibt.

14. Fahrzeug nach Anspruch 13, dadurch gekennzeichnet,
dass das Fahrzeug eine regelbare Vorderachse besitzt und auch eine starre Hinterachse (1) besitzt die verbunden ist mit der regelbaren Vorderachse.

## Revendications

1. Un véhicule pourvu d'un châssis (16) aux essieux dirigeables (1), dont au moins un essieu est un essieu dirigeable rigide, ladite suspension contenant au moins un élément de force, lié à un côté au châssis (16), et dont le longueur à chaque moment peut être réglé selon un signal dépendant de mouvement, ce signal étant un mesure pour le changement souhaité dans le sens du mouvement du véhicule, et ledit véhicule est caractérisé en ce que l'élément de force est un élément de force de réaction (4), qui est à l'autre côté directement lié à l'essieu rigide dirigeable (1), et que le longueur des éléments de force de réaction peut être réglé à chaque moment afin d'envoyer ainsi un signal dépendant de mouvement à l'essieu rigide dirigeable.

2. Un véhicule selon la revendication 1, caractérisé en ce que le véhicule est pourvu des moyens (13) qui fournissent un signal dépendant de la vitesse, ce signal dépendant de la vitesse de propulsion du véhicule, et le signal dépendant de la vitesse est introduit dans un dispositif de traitement (11), ensemble avec le signal dépendant du mouvement, ce dispositif de traitement (11) admettant les éléments de réaction, dont le longueur est réglable, au signal de mouvement seulement quand la vitesse est moins d'un valeur réglable.

3. Un véhicule selon la revendication 2, caractérisé en ce que le valeur réglable est à peu près 30 kilomètre à l'heure.

4. Un véhicule selon l'une quelconque des revendications 1 à 3, caractérisé en ce qu'un mécanisme de propulsion est monté à l'essieu rigide (1) du véhicule.

5. Un véhicule selon l'une quelconque des revendications 1 à 4, caractérisé en ce que l'essieu rigide (1) est monté dans un palier (2), dans un point de rotation qui se trouve presque dans le centre de l'essieu rigide réglable et possible à actionner, ledit point de rotation contenant un palier (2) qui fait possible un mouvement de l'essieu rigide dans au moins deux plans.

6. Un véhicule selon la revendication 5, caractérisé en ce que le palier contient des roulements à billes.

7. Un véhicule selon l'une quelconque des revendications 1 à 6, caractérisé en ce que les éléments de force de réaction (4) sont montés aux bouts de l'essieu rigide, des bouts qui sont presque diamétralement opposés.

8. Un véhicule selon l'une quelconque des revendications précédentes, où on refère à revendication 2, caractérisé en ce que le dispositif (13) contient un dispositif éléctronique avec le but de produire un signal éléctrique dépendant de la vitesse, et qu'un dispositif électronique (12) est pourvu pour produire un signal électrique qui contient de l'information concernant le sens de mouvement souhaité du véhicule, que le dispositif de traitement (11) contient un calculateur, ledit calculateur étant alimenté par au moins le signal électrique dépendant de la vitesse et le signal électrique dépendant du mouvement, et que le calculateur donne un signal qui, en cas le signal dépendant de la vitesse indique que la vitesse du véhicule est moins d'une certaine limite, contient de l'information concernant le sens de mouvement souhaité du véhicule, que les éléments de force de réaction (4) sont liés audit calculateur et sont tellement réalisés que, à base de l'information dans le signal électrique fourni par le calculateur, un changement de longueur dans les éléments de force de réaction apparait, un changement qui correspond au changement souhaité dans le sens de mouvement du véhicule.

9. Un véhicule selon la revendication 8, caractérisé en ce que les éléments de force de réaction (4) sont réalisés comme des dispositifs dont le longueur peut être réglé electriquement, pneumatiquement, mécaniquement ou hydrauliquement.

10. Un véhicule selon l'une quelconque des revendications 8 ou 9, caractérisé en ce qu'on a pourvu des dispositifs 23, qui ont la forme d'un releveur angulaire, et qui sont liés à l'essieu rigide (1) et avec de dispositif de traitement, et dont la fonction comporte la fourniture d'un signal qui est un mesure pour la position réglée de l'essieu rigide (1).

11. Un véhicule selon l'une quelconque des revendications 1 à 10, caractérisé en ce que le déplacement angulaire maximal (A) qui peut être atteint par réglage de l'essieu rigide (1), quand ceci est mesuré à l'égard de la position pas rectifiée, est plus petit que le déplacement angulaire maximal (B) qui peut être atteint avec un essieu dirigeable avant.

12. Un véhicule selon la revendication 11, caractérisé en ce qu'il y a une relation programmable entre (A) et (B).

13. Un véhicule selon l'une quelconque des revendications précédentes, caractérisé en ce que le véhicule contient plusieurs essieux dirigeables (1) qui peuvent être actionnés par des mécanismes de propulsion, respectivement connectés en série (19, 20, 21), au moins un des essieux rigides (1) du véhicule contenant des éléments de force de réaction (4) pour réglage d'au moins cet essieu rigide (1) ou essieux s'il y a plusieurs.

14. Un véhicule selon la revendication 13, caractérisé en ce que le véhicule contient un essieu rigide dirigeable et aussi un essieu rigide arrière qui est lié a l'essieu dirigeable avant.
